# EUROPÄISCHE PATENTANMELDUNG

(11) **EP 1 557 919 A1**
(43) Veröffentlichungstag der Anmeldung: **27.07.2005**
(21) Anmeldenummer: 05001093.3
(22) Anmeldetag: 20.01.2005
(51) Int. Cl.: H02B 13/025

(54) **Elektrische gasisollierte Schaltanlage**

(30) Priorität: 21.01.2004 DE 102004003031
(71) Anmelder: Ormazabal Anlagentechnik GmbH, 47804 Krefeld (DE)
(72) Erfinder: Kaulbars, Armin, 47877 Willich (DE)

(57) **Zusammenfassung**

Die Erfindung betrifft eine Leitvorrichtung für im Fehlerfall (Störlichtbogen) austretendes Plasma oder Gas an einer gasisolierten Schaltanlage der Hoch- oder Mittelspannung. Der Kern der Erfindung ist eine Leitvorrichtung (10) für mindestens einen austretenden Gasstrom, wobei diese an der Schaltanlage angeordnet und derart ausgebildet ist, dass in der Leitvorrichtung (10) mindestens ein Strömungskanal (40) vorhanden ist, der für aus dem Tank (50) austretendes und für aus dem Nebenbehälter (60) austretendes Gas jeweils eine Durchströmung (40) auf geradem Weg zulässt.

## Beschreibung

Die Erfindung betrifft eine elektrische gasisolierte Schaltanlage der Hoch- oder Mittelspannung.

Bei Schaltanlagen wird generell Sachanlagen- und Personenschutz gegen Druckbelastung durch störungsbedingten Gasaustritt verlangt. Durch Kurzschluss in der Anlage entstehende Lichtbögen bauen hohen Druck und hohe Temperatur auf, die schädliche Auswirkungen haben. Aus der Schaltanlage austretendes Gas reißt metallische und nichtmetallische Abbrandbestandteile mit sich. Um luftgefüllte Anlagen kompakt zu gestalten, werden zusätzliche Isoliermaterialien aus Kunststoff eingebracht, um unterschiedliche Phasen spannungsführender Teile gegeneinander zu isolieren, weil der vorhandene Luftisolationsabstand allein nicht ausreicht. Demzufolge entstehen im Falle eines Lichtbogens in luftgefüllte Anlagen - neben metallischen Teilchen - besonders große Mengen an Kunststoffabbrand (vornehmlich Ruß).

Zur Minderung der genannten schädlichen Wirkungen sind schon Druckausgleichs- und Filteranordnungen vorgeschlagen worden.

Einer dieser Vorschläge (DE 19645304 C2) besteht darin, dass aus verschiedenen Funktionsräumen der Schaltanlage ausströmende Gase in einen gemeinsamen Druckentlastungskanal eintreten und der Druckentlastungskanal vor dem Auslaß nach außen mit einem Dämpfungselement abgeschlossen ist. Ein solches Dämpfungselement kann beispielsweise Winkelbleche als Deflektorelemente aufweisen.

Bei dieser Konstruktion legen die austretenden heißen Gase einen relativ langen Weg zurück, in dem die Hitzeentwicklung Schäden anrichten kann, bevor die Gase in das Dämpfungselement eintreten und dort abgekühlt werden.

Es ist die Aufgaben der Erfindung, eine Vorrichtung anzugeben, die von den heißen Gasen durchströmbar ist, und die möglichst nahe am Entstehungs- oder Austrittsort der Gase angeordnet ist, um den Weg schädlicher Gase zu verkürzen.

Die Lösung findet sich in den Merkmalen des Hauptanspruchs. Weiterführende Ausführungsformen sind in den Unteransprüchen formuliert.

Ein wesentlicher Kern der Erfindung ist, dass in der Schaltanlage die Druckentlastungsöffnungen des Isoliergastanks und des Nebenbehälters räumlich benachbart angeordnet sind und dass in dem Bereich der räumlichen Nachbarschaft eine Leitvorrichtung für austretende Gasströme angeordnet ist, wobei die Leitvorrichtung mindestens einen Strömungskanal aufweist, der sowohl von einem aus dem Isoliergastank austretenden als auch von einem aus dem Nebenbehälter austretenden Gasstrom durchströmbar ist.

Schaltanlagen mit der erfindungsgemäßen Leitvorrichtung können in Containern oder nachträglich beispielsweise in Altbauten installiert werden, wobei wegen des geringen zusätzlichen Raumbedarfs kein besonderer Aufwand für die Stabilisierung (Verstärkung) des Wandaufbaus getrieben werden muss. Der Einsatz insbesondere in Gebäuden mit Ziegelwänden ist vorteilhaft, weil bei einem solchen Wandaufbau ungeminderte Druckstöße gefährlich sind.

Die Leitvorrichtung hat mindestens einen Strömungskanal, der aus Metallplatten gebildet wird. Mehrere Strömungskanäle werden in einem Stapel aus Metallplatten ausgebildet, worin die Zwischenräume jeweils die Strömungskanäle darstellen. Die Metallplatten sind senkrecht zur Öffnung der Druckentlastungsvorrichtung und senkrecht zur Austrittsöffnung am Nebenbehälter der Schaltanlage angeordnet. Jeweils aus dem Gastank oder aus dem Nebenbehälter ausströmendes Plasma durchströmt die Kanäle der Leitvorrichtung auf geradem Weg ohne Umlenkung des Gasstroms. Die große Masse der Leitvorrichtung hat eine große Wärmekapazität. Mit hoher Wärmeaufnahmefähigkeit kann ein Temperaturanstieg nach oben begrenzt werden.

Wegen der verminderten Temperatur können sich mitgeführte Schadstoffpartikel unmittelbar auf den Metallplatten niederschlagen. Da die Zersetzungs- und Reaktionsprodukte zum Großteil abgefangen werden, tritt im Gegensatz zu Anlagen ohne Leitvorrichtung eine deutliche Verminderung schädlicher Abbrandreste in der Nähe der Schaltanlage auf. Als Nebeneffekt zur Temperaturminderung erfolgt im Gasstrom eine Schwächung des Druckanstiegs.

Der Vorteil dieser Anordnung ist also, dass mit relativ einfachem Aufbau, mit geringem Raumbedarf und einfacher Materialauswahl eine wirksame Gaslenkung, eine Druckminderung und auch eine Schadstoffminderung erreichbar ist. Die Anordnung ist unmittelbar Teil der Schaltanlage. Außerdem lässt sie sich in eine Wand von Nebenbehältern (z. B. eines Kabelanschlusskastens) integrieren. Äußere, weitere Anbauten an die Schaltanlagen sind nicht notwendig.

An Schaltanlagen einschließlich Transformatorstationen sind in der Regel mehrere Schaltfelder und/oder Nebenbehälter ausgebildet. Ein Nebenbehälter kann beispielsweise ein Kabelanschlusskasten sein.

### Vorteilhafte Ausgestaltungen können folgende sein:

Die Leitvorrichtung kann tankaußenseitig vor mindestens einer Druckentlastungsöffnung befestigt sein.

Die Leitvorrichtung soll räumlich kompakt aufgebaut sein und eine hohe Wärmekapazität aufweisen.

In der Leitvorrichtung können mehrere Strömungskanäle ausgebildet sein, wobei die Strömungskanäle aus parallel angeordneten Metallplatten gebildet werden. Die Metallplatten können aus Stahl bestehen, und eine Dicke von 3 bis 6 mm und einen Abstand untereinander von 3 bis 10 mm haben. Die Metallplatten können quadratisch ausgebildet sein und eine einheitliche Länge von etwas größer als dem Durchmesser der Druckentlastungsöffnung haben.

Die genannten Merkmale können einzeln oder in Kombination mit den Merkmalen des Hauptanspruchs verwendet oder eingesetzt werden.

Ausführungsformen der Erfindung werden in zwei Figuren dargestellt. So zeigen diese im Einzelnen
- Fig. 1: eine Schaltanlage mit Kabelanschlusskasten und Gasdurchlass und
- Fig. 2: eine perspektivische Ansicht der Leitvorrichtung.

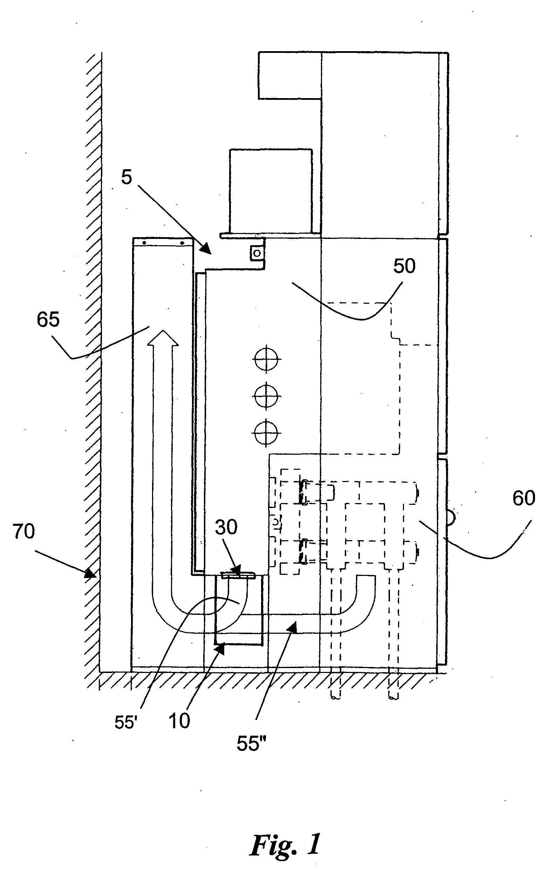

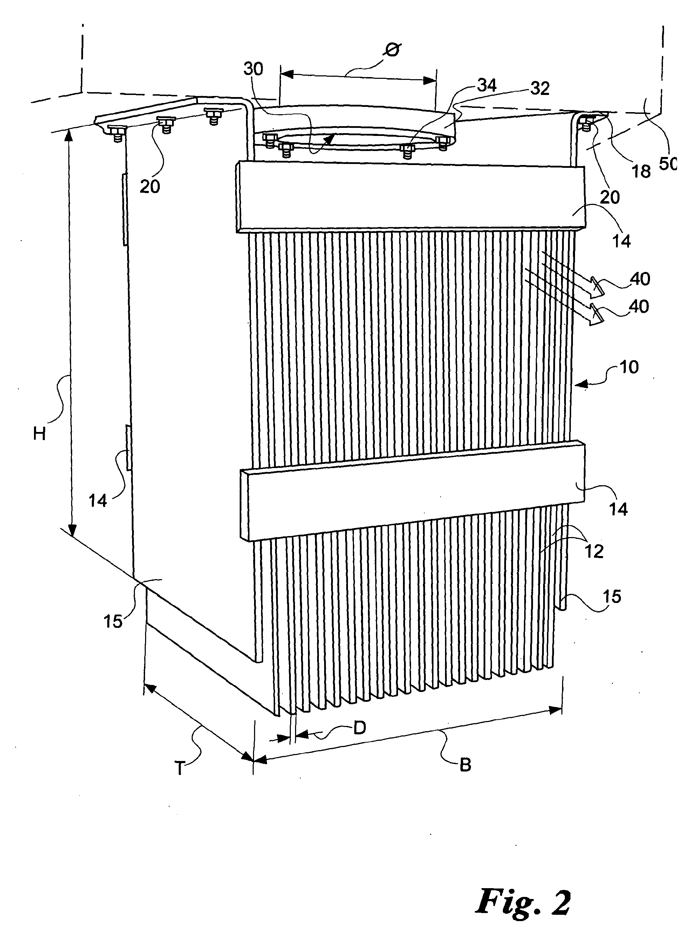

In der Fig. 1 ist schematisch eine Schaltanlage 5 der Mittelspannung dargestellt, die in einem Gebäude untergebracht ist, von dem eine Gebäudewand 70 und der Gebäudeboden angedeutet ist. Der Kern der Schaltanlage ist der mit Isoliergas gefüllte, hermetisch geschlossene Gastank 50. Im Vorderteil der Schaltanlage ist ein Kabelanschlusskasten 60 gezeichnet. Im Fehlerfall können Störlichtbögen im Tank und in elektrisch ausgestatteten Nebengehäusen (Kabelanschlusskasten, Traforaum) entstehen. Im Boden des Tanks 50 ist eine Berstscheibe (Druckentlastungsöffnung 30) vorhanden, welche als Austrittsort für Störlichtbogen-Plasma aus dem Gastank fungiert. Aus dem elektrisch ausgestatteten Nebengehäuse 60 ausströmendes Gas und aus dem Gastank austretendes Gas strömen in Hohlräume nach unten und hinten. Die dargestellte Anlage ist mit einem als Abströmkanal ausgebildetem Durchlass 65 ausgestattet, in den die austretenden Gase über einen der Strömungswege 50' oder 50" nach hinten und oben abgeführt werden. Erfindungsgemäß ist die Leitvorrichtung 10 (siehe Fig. 2) in einem Bereich angeordnet, der sowohl von dem aus dem Tank 50 als auch von dem aus dem Nebengehäuse 60 im Fehlerfall austretenden Plasma durchströmt wird.

Als Isoliergas kann beispielsweise SF6 eingesetzt sein. Mit SF6-Gas ergeben sich kleine räumliche Dimensionen des Gastanks. Solche Anlagen haben in der Regel nur eine einzige Druckentlastungsöffnung (Berstscheibe). Bei Verwendung anderer Gase oder bei Anlagen größerer Leistung können auch mehrere Druckentlastungsöffnungen notwendig sein. Gemäß der Erfindung wird bei solchen Anlagen möglichst hinter jeder Druckentlastungsöffnung eine Leitvorrichtung angeordnet. SF6-Gasvolumina typischer Anlagen liegen je nach Leistung zwischen 80 bis 400 Litern. Die Stromstärken von Störlichtbögen für Anlagen von 12 bis 36 kV liegen bei 16 bis 25 kA. Der Durchmesser der Ausblasöffnung der Druckgehäuse liegt zwischen 70 bis 108 mm je nach Anlagentyp.

Wie erwähnt, ist die Druckentlastungsöffnung mit einer Berstscheibe verschlossen. Sie ist in einem flanschartigen, kreisrunden Rahmen 32 mit Befestigungsschrauben 34 eingespannt. Die Berstscheibe 32 besteht aus einer 0,2 bis 0,3 mm dicken Edelstahlfolie. Die Öffnung hat einen Ausströmungsquerschnitt, der dem Volumen des Gastanks angepasst ist.

Nach Darstellung in Fig. 2 ist die Leitvorrichtung 10 mit geringem Abstand hinter der Berstscheibe befestigt. Die Befestigung kann unmittelbar am Gastank 50 oder an Wandelementen eines der Schaltanlage zugeordneten Nebengehäuses 60 vorgenommen werden. Das Aufbrechen der in der Öffnung eingesetzten Berstscheibe ist auf einen bestimmten Überdruck vorbestimmt. Beispielsweise kann ein solcher Überdruck auf 1,5 bar vorbestimmt sein. Bei größerer Drucküberlast reißt die Berstscheibe auf. An Kabelanschlusskästen ist in der Regel keine besondere Druckentlastungsvorrichtung vorhanden. Hier reicht eine Durchtrittsöffnung, um dem Gas einen Auslass mit möglichst geringem Strömungswiderstand zu bieten.

Durch das austretende Plasma wird die Folie in der Berstscheibe in Teile zerrissen und weggeschleudert. Kleine Teile der hauchdünnen Metallfolie können zwar an der Leitvorrichtung hängenbleiben, doch bilden diese keinen nennenswerten Widerstand oder Querschnittsverengung. Die Gasströmung (40) wird mechanisch nicht beeinflusst.

Das Ausführungsbeispiel ist besonders für eine SF6-isolierte Schaltanlage mit maximaler Schaltleistung von 16 kA dimensioniert. Eine solche Schaltanlage hat beispielsweise ein Volumen des SF6-Gastanks von ca. 250 Litern und einen Gas-Innendruck von 1,3 bar. Bei solchen Schaltanlagen sind bei einem durch 16 kA Kurzschlussstrom entstandenem Lichtbogen Druckanstiege auf 3 bis 5 bar gemessen worden.

Bei Einsatz der Leitvorrichtung wird die Druckentwicklung vermindert. Bei einer Schaltanlage des vorgenannten Typs wird ein Druckanstieg in der unmittelbaren Umgebung (im Kabelanschlusskasten) von nur 20 bis 30 mbar gemessen.

Die Leitvorrichtung 10 ist in Strömungsrichtung hinter der Druckentlastungsöffnung 30 angeordnet und der Durchtrittsquerschnitt T × B der Leitvorrichtung entspricht dem Ausströmungsquerschnitt Φ der Berstscheibe. Für Montagezwecke kann ein Abstand hinter der Berstscheibe von einigen Millimeter eingehalten sein (etwa 20 bis 40 mm). In der einzigen Figur ist die Leitvorrichtung 10 mit Halteelementen (Flansch 18, Schrauben 20) unmittelbar am Gastank 50 befestigt.

Es werden vorzugsweise Metallplatten 12, 15 aus Stahlblech mit einer Dicke D von 3 bis 6 mm eingesetzt, die einen Abstand untereinander von 3 bis 10 mm haben. Hierdurch werden mehrere Strömungskanäle 40 gebildet. Der Plattenstapel wird durch Streben 14 seitlich gehalten. Die Metallplatten 12 können quadratisch oder rechteckig ausgebildet sein. Beispielsweise können sie folgende Abmessungen haben: Tiefe T entsprechend dem Ausströmungsquerschnitt Φ der Berstscheibe von 200 mm (mit einer möglichen Bandbreite von 150 bis 300 mm) und einheitliche Länge H von 300 mm (mit einer Bandbreite von 200 bis 400 mm). Beispielsweise hat ein Plattenstapel aus Stahl mit den Dimensionen 5 × 300 × 200 mm³ ein Volumen von 300 cm³, bzw. eine Masse von mindestens 2,3 kg, wobei noch Masseanteile der Befestigungselemente (Streben, Schrauben) hinzukommen. Mit dieser Gestaltung lässt sich auf kleinem Raum eine Leitvorrichtung mit hoher Wärmekapazität aufbauen. Wegen der großen Wärmekapazität kann viel Wärme aufgenommen und das austretende Gas wirksam gekühlt werden.

Die Gestaltung der Leitvorrichtung bezüglich Dimensionierung der Metallplatten (Masse, Querschnitt, Flächen- oder Dickenmaße) kann für andere Leistungen, für Gastanks mit anderen Isoliergasen und entsprechend der Zahl vorhandener Druckentlastungsfenster von einem Fachmann entsprechend angepasst werden.

## Patentansprüche

1. Elektrische Schaltanlage der Hoch- oder Mittelspannung mit einem hermetisch geschlossenen, mit Isoliergas gefüllten Tank (50) und mit mindestens einem der Schaltanlage (5) zugeordneten, spannungführenden Nebenbehälter (60),
wobei der Isoliergastank (50) als auch der Nebenbehälter (60) jeweils eine Druckentlastungsöffnung (30) für im Fehlerfall austretenden Strom (55', 55") von Lichtbogengasen aufweisen,
**dadurch gekennzeichnet, dass** in der Schaltanlage die Druckentlastungsöffnungen (30) des Isoliergastanks (50) und des Nebenbehälters (60) räumlich benachbart angeordnet sind und dass in dem Bereich der räumlichen Nachbarschaft eine Leitvorrichtung (10) für austretende Gasströme (55', 55") angeordnet ist, wobei die Leitvorrichtung (10) mindestens einen Strömungskanal (40) aufweist, der sowohl von einem aus dem Isoliergastank (50) austretenden als auch von einem aus dem Nebenbehälter (60) austretenden Gasstrom (55") durchströmbar ist.

2. Schaltanlage nach Anspruch 1, **dadurch gekennzeichnet, dass** der Strömungskanal (40) in der Leitvorrichtung (10) so gestaltet ist, dass er für jeden der möglichen Gasströme (55', 55") eine Durchströmung auf geradem Weg zulässt.

3. Schaltanlage nach Anspruch 1 oder 2, **dadurch gekennzeichnet, dass** die Leitvorrichtung (10) tankaußenseitig vor mindestens einer Druckentlastungsöffnung (30) befestigt ist,

4. Schaltanlage nach einem der vorhergehenden Ansprüche, **dadurch gekennzeichnet, dass** die Leitvorrichtung (10) räumlich kompakt aufgebaut ist und eine hohe Wärmekapazität aufweist.

5. Schaltanlage nach dem vorhergehenden Anspruch, **dadurch gekennzeichnet, dass** der oder die Strömungskanäle (40) aus parallel angeordneten Metallplatten (12, 15) gebildet werden.

6. Schaltanlage nach dem vorhergehenden Anspruch, **dadurch gekennzeichnet, dass** die Metallplatten (12) aus Stahl bestehen, und eine Dicke von 3 bis 6 mm und einen Abstand untereinander von 3 bis 10 mm haben.

7. Schaltanlage nach dem vorhergehenden Anspruch, **dadurch gekennzeichnet, dass** die Metallplatten (12) quadratisch ausgebildet sind und eine einheitliche Länge von etwas größer als dem Durchmesser der Druckentlastungsöffnung (30) haben.

8. Schaltanlage nach einem der vorhergehenden Ansprüche, **dadurch gekennzeichnet, dass** die Leitvorrichtung (10) mit Halteelementen (18, 20) am Gastank (50) oder an Wandelementen des Nebenbehälters (65) befestigt ist.

9. Schaltanlage nach einem der vorhergehenden Ansprüche, **dadurch gekennzeichnet, dass** der Nebenbehälter (60) als Kabelanschlusskasten oder als Traforaum ausgebildet ist.

10. Schaltanlage nach einem der vorhergehenden Ansprüche, **dadurch gekennzeichnet, dass** die Druckentlastungsöffnung (30) mit einer Berstscheibe (32) aus Metallfolie verschlossen ist.
